# FASCICULE DE BREVET EUROPEEN

(11) **EP 2 005 868 B1**
(45) Date de publication et mention de la délivrance du brevet: **24.02.2010**
(21) Numéro de dépôt: 08356091.2
(22) Date de dépôt: 18.06.2008
(51) Int. Cl.: A47J 43/07, B67D 3/04, F16K 1/20, F16K 31/60, A47J 36/14

(54) **Robinet pour distribuer les aliments contenus dans un récipient et appareil électroménager de préparation culinaire muni d'un tel robinet**
Hahn zur Verteilung von in einem Behälter enthaltenen Lebensmitteln und Haushaltsgerät zum Kochen, das mit einem solchen Hahn ausgestattet ist
Tap for dispensing the food contained in a container and household cooking appliance comprising such a tap

(30) Priorité: 22.06.2007 FR 0704460
(43) Date de publication de la demande: 24.12.2008
(73) Titulaire: SEB S.A., 69130 Ecully (FR)
(72) Inventeur: Follezour, Anne-Estelle, 53100 Châtillon sur Colmont (FR); Retour, Stéphane, 53100 Moulay (FR); Feron, Stéphanie, 53440 Marcille la Ville (FR); Paumard, Jonathan, 53470 Martigne sur Mayenne (FR); Eveillard, Philippe, 53300 Saint Fraimbault de Prières (FR); Martin, Philippe, 53240 Andouille (FR)
(74) Mandataire: Kiehl, Hubert

(56) Documents cités:
- WO-A-2006/084055

## Description

La présente invention se rapporte au domaine technique général des robinets pour récipient d'appareil électroménager de préparation culinaire et se rapporte plus particulièrement à un robinet comportant des moyens de soupape ramenés en position de fermeture par des moyens de rappel et commandés à l'ouverture par un levier d'actionnement.

Il est connu, de la demande de brevet JP 2004-357752, un appareil de préparation culinaire comportant un récipient muni d'un robinet pour distribuer les aliments, le robinet comprenant un levier monté pivotant sur un capuchon vissé sur le corps du robinet, le levier étant rendu solidaire du capuchon par un axe d'articulation engagé dans un crochet disposé à l'extrémité d'une tige traversant le capuchon et actionnant la soupape de fermeture du robinet à l'encontre d'un ressort.

Un tel robinet présente l'avantage d'être totalement démontable pour son nettoyage. Cependant, le démontage et le remontage d'un tel robinet présente l'inconvénient d'être relativement long car il nécessite le dévissage du bouchon pour pouvoir extraire l'ensemble bouchon, levier et soupape de fermeture, puis de désengager le levier de son crochet pour pouvoir nettoyer toutes les pièces de la soupape de fermeture.

Un tel robinet présente également l'inconvénient d'être relativement compliqué à remonter, ce qui peut décourager l'utilisateur de le nettoyer après chaque utilisation. Or, le nettoyage d'un robinet d'appareil électroménager de préparation culinaire est particulièrement important pour éviter tout risque de contamination par des bactéries pouvant se développer à l'intérieur du robinet.

Un robinet représentant l'état de la technique est connu du document WO 2006/084055.

Aussi, un but de la présente invention est de proposer un robinet pour récipient d'appareil électroménager de préparation culinaire qui soit très simple à démonter et à monter, et qui soit économique à réaliser. Un autre but de la présente invention est de proposer un robinet qui permette un accès rapide aux zones devant être nettoyées en démontant un nombre réduit de pièces.

A cet effet, l'invention se rapporte à un robinet pour distribuer les aliments contenus dans un récipient d'appareil électroménager de préparation culinaire, le robinet comportant un corps comprenant un orifice d'entrée, un orifice de sortie et renfermant des moyens de soupape à ouverture commandée disposés entre l'orifice d'entrée et l'orifice de sortie, les moyens de soupape étant ramenés en position de fermeture par des moyens de rappel et commandés à l'ouverture par un levier d'actionnement, caractérisé en ce que le levier d'actionnement est monté pivotant sur le corps du robinet au moyen d'un axe d'articulation maintenu engagé dans au moins un crochet de guidage par des moyens ressort, le levier d'actionnement pouvant être démonté du corps du robinet en appuyant sur le levier pour comprimer les moyens ressort et désengager l'axe d'articulation du crochet de guidage et en ce que le levier d'actionnement supporte les moyens de soupape de sorte que ces derniers sont extrait du corps du robinet en même temps que le levier d'actionnement lors de son démontage.

Selon une autre caractéristique de l'invention, l'axe d'articulation est guidé par deux crochets de guidage.

Selon une autre caractéristique de l'invention, l'axe d'articulation est porté par le levier d'actionnement et le ou les crochets de guidage sont portés par le corps du robinet.

Selon une autre caractéristique de l'invention, les moyens de rappel des moyens de soupape et les moyens ressort assurant le maintien de l'axe d'articulation dans le ou les crochets de guidage sont constitués par un même ressort.

Selon encore une autre caractéristique de l'invention, le corps du robinet comporte un conduit d'arrivée des aliments débouchant sur un ajutage et les moyens de soupape sont constitués par un joint d'étanchéité comportant une face propre à s'appliquer contre un siège de fermeture entourant l'ajutage.

Selon encore une autre caractéristique de l'invention, le joint d'étanchéité est en matériau silicone.

Selon une autre caractéristique de l'invention, le corps du robinet comporte une tête reliée au conduit d'arrivé des aliments et munie de l'orifice de sortie, la tête définissant un socle de réception du joint d'étanchéité et comportant une ouverture dans sa partie supérieure par laquelle est introduit le joint d'étanchéité, cette ouverture étant masquée par le levier d'actionnement lorsque ce dernier est en position de fermeture du robinet.

Selon une autre caractéristique de l'invention, le corps du robinet et le levier d'actionnement sont réalisés en matériau plastique.

Selon une autre caractéristique de l'invention, le robinet est monté de manière amovible sur le récipient.

L'invention concerne également un appareil électroménager de préparation culinaire comportant un récipient de travail renfermant un outil rotatif pour le mixage des aliments, caractérisé en ce que le récipient comporte un robinet tel que précédemment décrit.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue en perspective d'un appareil de préparation culinaire comportant un récipient muni d'un robinet selon un mode particulier de réalisation de l'invention,
- la figure 2 est une vue en perspective du récipient de l'appareil de la figure 1 avec le robinet désaccouplé du récipient,
- la figure 3 est une en perspective du robinet démonté,
- la figure 4 est une vue en coupe longitudinale du robinet en position de fermeture,
- la figure 5 est une vue en perspective, partiellement arrachée, du robinet en position d'ouverture.

Seuls les éléments nécessaires à la compréhension de l'invention ont été représentés. Pour faciliter la lecture des dessins les mêmes éléments portent les mêmes références d'une figure à l'autre.

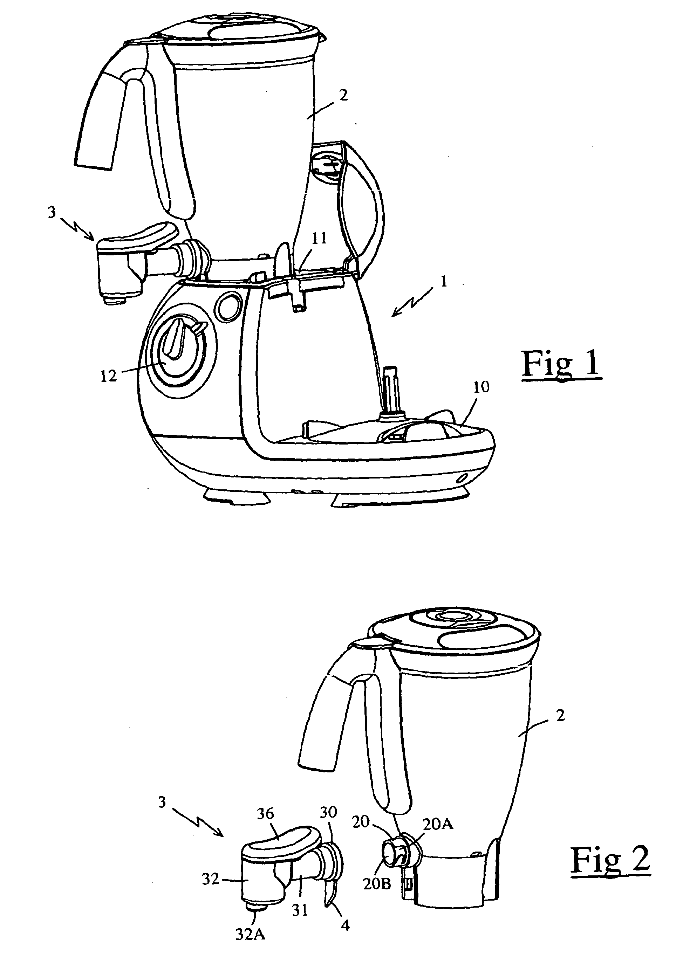

Les figures 1 et 2 illustrent un appareil de préparation culinaire comportant un boîtier 1 en L comprenant classiquement un socle de réception 10 inférieur destiné à recevoir un récipient de grande capacité, non représenté sur les figures, et un socle de réception 11 supérieur adapté pour recevoir un récipient 2 de type blender.

Le socle de réception 11 présente, de manière connue en soi, la forme d'une cavité de forme complémentaire à la base du récipient 2 et comporte un entraîneur solidaire en rotation de l'arbre de sortie d'un moteur électrique intégré dans le boîtier 1, non représenté sur les figures, l'entraîneur étant adapté pour s'accoupler avec l'extrémité inférieure d'un outil rotatif contenu dans le récipient 2 lorsque ce dernier est posé sur le socle de réception 11.

Un tel récipient 2 est particulièrement adapté pour la préparation de boissons, telles que des milk-shake, la mise en marche et la vitesse de rotation du moteur étant avantageusement pilotées au moyen d'une console de commande 12 disposée sur la face avant du boîtier 1.

Afin de faciliter le versement du contenu du récipient 2 dans un verre, le récipient 2 comporte un robinet 3 de distribution disposé à proximité de la base du récipient 2.

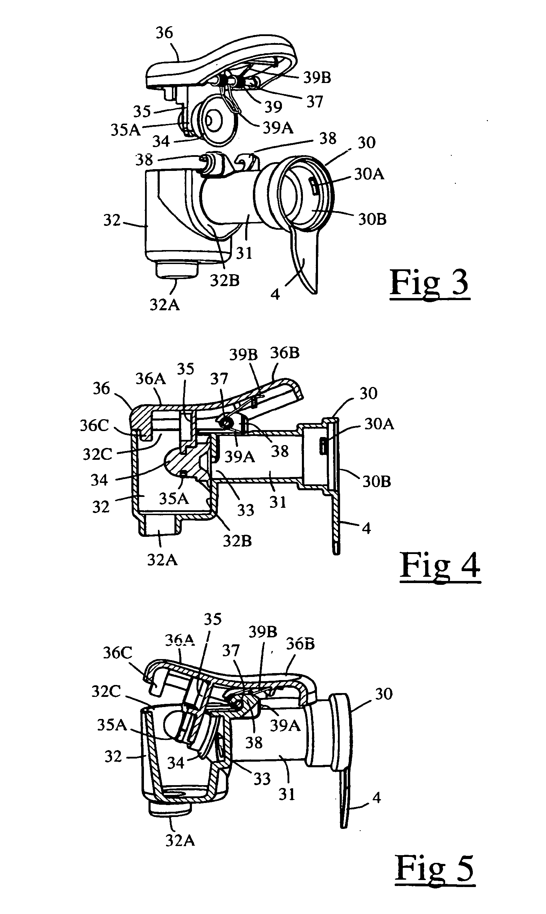

Conformément aux figures 2 et 3, le robinet 3 est avantageusement monté de manière amovible sur le récipient 2, par exemple au moyen d'une liaison baïonnette, et comporte à cet effet un corps en matériau plastique muni d'une bride de fixation 30 comprenant des ergots 30A venant s'engager dans des gorges 20A d'un manchon d'accouplement 20 entourant une ouverture 20B réalisée dans la paroi du récipient 2, à proximité de son extrémité inférieure.

De manière avantageuse, la bride de fixation 30 du robinet comporte un doigt 4 venant actionner un interrupteur de sécurité intégré dans le boîtier 1 et autorisant la mise en marche du moteur d'entraînement de l'outil rotatif, l'absence d'actionnement de cet interrupteur empêchant le fonctionnement de l'appareil. Une telle sécurité présente l'avantage d'éviter que l'appareil ne soit utilisé avec le récipient 2 démuni du robinet 3.

Conformément à la figure 4, le corps du robinet 3 comporte un orifice d'entrée 30B à hauteur de la bride de fixation 30 et comporte, dans le prolongement de la bride de fixation 30, un conduit 31 d'arrivée des aliments s'étendant axialement à la bride de fixation 30 et débouchant dans une tête 32 de forme sensiblement cylindrique munie d'un orifice de sortie 32A, la tête 32 comportant localement une paroi plane 32B munie d'un ajutage 33 de forme semi-cylindrique au niveau duquel débouche la partie inférieure du conduit 31 d'arrivée des aliments.

La tête 32 sert de logement à des moyens de soupape à ouverture commandée par un levier d'actionnement 36 et comporte à cet effet une extrémité supérieure ouverte par laquelle sont introduit des moyens de soupape constitués par un joint d'étanchéité 34 en silicone venant s'appliquer contre un siège de fermeture porté par la paroi 32B en bordure de l'ajutage 33, le joint d'étanchéité 34 étant porté par un bras 35 s'étendant à l'intérieur de la tête 32 et relié au levier d'actionnement 36.

Le bras 35 s'étend perpendiculairement à la partie avant 36A du levier et le joint d'étanchéité 34 est avantageusement maintenu sur le bras 35 par clipsage, l'extrémité du bras comportant une griffe 35A ouverte à son extrémité inférieure dans laquelle peut s'engager élastiquement une partie cylindrique du joint d'étanchéité 34, ce dernier présentant une extrémité en forme de ventouse conique venant prendre appui sur le siège de fermeture autour de l'ajutage 33.

Plus particulièrement selon l'invention, le levier d'actionnement 36 est monté pivotant sur la partie supérieure du corps du robinet 3 au moyen d'un axe d'articulation 37 venant s'engager dans deux crochets de guidage 38 ouverts au niveau de leur partie inférieure avant afin de permettre l'engagement et le désengagement rapide de l'axe d'articulation 37. A titre d'exemple, la hauteur de l'ouverture des crochets de guidage 38 pourra être avantageusement comprise entre 0,9 et 1,2 fois le diamètre de l'axe d'articulation 37.

De manière avantageuse, l'axe d'articulation 37 est constitué par un axe métallique rapporté s'étendant perpendiculairement à la direction longitudinale du levier 36 et les deux crochets de guidage 38 sont disposés sur la surface supérieure du corps, à proximité de la jonction entre la tête 32 et le conduit d'arrivée 31, et sont orientés de telle sorte que l'axe d'articulation 37 du levier 36 s'étend perpendiculairement au conduit 31 d'arrivée des aliments et sensiblement horizontalement lorsque le robinet 3 est monté sur le récipient 2.

L'axe d'articulation 37 est maintenu engagé dans les crochets de guidage 38 par un ressort 39 enroulé pour partie autour de l'axe d'articulation 37 et dont une première partie 39A, présentant la forme d'une languette, vient prendre appui contre le sommet du corps du robinet 3 et exerce une poussée maintenant l'axe d'articulation 37 en appui contre la partie supérieure des crochets 38, ces derniers présentant une surface intérieure cylindrique servant de palier de guidage à l'axe d'articulation 37. A titre d'exemple, la hauteur de la surface servant de palier de guidage pourra être avantageusement comprise entre 0,4 et 0,7 fois le diamètre de l'axe d'articulation 37.

Le ressort 39 comporte également une deuxième partie 39B, formée par les deux extrémités du fil, qui s'étend depuis l'axe d'articulation 37 jusqu'au levier 36 pour prendre appui sous l'extrémité arrière de ce dernier et ramener le levier 36 dans une position de repos dans laquelle le joint d'étanchéité 34 est en appui contre le siège de fermeture entourant l'ajutage 33 et assure une fermeture étanche du conduit 31 d'arrivée des aliments.

De manière préférentielle, le levier 36 comporte une partie avant 36A s'étendant au dessus de la tête 32 du robinet et présentant une surface supérieure sensiblement plane présentant une forme extérieure épousant la forme extérieure de la tête 32 du robinet pour venir masquer l'ouverture supérieure 32C de cette dernière lorsque le levier 36 est ramené en position de repos par ie ressort 39, ainsi que cela est illustré sur la figure 4. Afin de garantir un bon positionnement du levier 36 en position de repos, l'extrémité avant du levier comporte un ergot de positionnement 36C adapté pour venir s'engager dans l'ouverture supérieure de la tête 32, en bordure de sa paroi cylindrique.

Conformément aux figures 4 et 5, le levier d'actionnement 36 du robinet présente une courbure à hauteur de l'axe d'articulation 37 puis se prolonge par une partie arrière 36B relevée, s'étendant au dessus du conduit 31 d'arrivée des aliments de telle sorte que l'ouverture du robinet 3 s'effectue en appuyant sur la partie arrière 36B du levier d'actionnement de manière à faire basculer ce dernier autour de l'axe d'articulation 37 à l'encontre du ressort 39 de rappel, et à provoquer l'écartement du joint d'étanchéité 34 du siège de fermeture de la paroi 32B simultanément au soulèvement de la partie avant 36A du levier.

Un tel robinet présente l'avantage d'être simple et économique à réaliser et peut être démonté rapidement en appuyant verticalement sur le levier au niveau de l'axe d'articulation ou sur la partie arrière du levier, pour comprimer la deuxième extension du ressort, puis en poussant vers l'avant le levier pour extraire son axe d'articulation par l'ouverture des crochets.

On obtient alors un robinet en deux parties, le corps du robinet étant alors séparé du levier supportant le joint d'étanchéité, qui peuvent être aisément nettoyées. Si nécessaire, le joint d'étanchéité porté par le levier peut également aisément être extrait de sa griffe, en tirant simplement sur le joint d'étanchéité.

Le remontage du robinet s'effectue très facilement en réalisant l'opération inverse.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Robinet (3) pour distribuer les aliments contenus dans un récipient (2) d'appareil électroménager de préparation culinaire, ledit robinet (3) comportant un corps comprenant un orifice d'entrée (30B), un orifice de sortie (32A) et renfermant des moyens de soupape (34) à ouverture commandée disposés entre l'orifice d'entrée (30B) et l'orifice de sortie (32A), lesdits moyens de soupape (34) étant ramenés en position de fermeture par des moyens de rappel (39B) et commandés à l'ouverture par un levier d'actionnement (36), **caractérisé en ce que** ledit levier d'actionnement (36) est monté pivotant sur le corps du robinet (3) au moyen d'un axe d'articulation (37) maintenu engagé dans au moins un crochet de guidage (38) par des moyens ressort (39A), le levier d'actionnement (36) pouvant être démonté dudit corps en appuyant sur le levier (36) pour comprimer lesdits moyens ressort (39A) et désengager ledit axe d'articulation (37) du crochet de guidage (38) et **en ce que** ledit levier d'actionnement (36) supporte lesdits moyens de soupape (34) de sorte que ces derniers sont extrait du corps du robinet en même temps que le levier d'actionnement (36) lors de son démontage.

2. Robinet selon la revendication 1, **caractérisé en ce que** l'axe d'articulation (37) est guidé par deux crochets de guidage (38).

3. Robinet selon l'une quelconque des revendications 1 à 2, **caractérisé en ce que** l'axe d'articulation (37) est porté par le levier d'actionnement (36) et **en ce que** le ou les crochets de guidage (38) sont portés par le corps du robinet (3).

4. Robinet selon l'une quelconque des revendications 1 à 3, **caractérisé en ce que** les moyens de rappel (39B) des moyens de soupape (34) et les moyens ressort (39A) assurant le maintien de l'axe d'articulation (37) dans le ou les crochets de guidage (38) sont constitués par un même ressort (39).

5. Robinet selon l'une quelconque des revendications 1 à 4, **caractérisé en ce que** le corps du robinet comporte un conduit (31) d'arrivée des aliments débouchant sur un ajutage (33) et **en ce que** les moyens de soupape sont constitués par un joint d'étanchéité (34) comportant une face propre à s'appliquer contre un siège de fermeture entourant ledit ajutage (33).

6. Robinet selon la revendication 5, **caractérisé en ce que** ledit joint d'étanchéité (34) est en matériau silicone.

7. Robinet selon l'une quelconque des revendications 5 à 6, **caractérisé en ce que** le corps du robinet comporte une tête (32) reliée au conduit (31) d'arrivé des aliments et munie dudit orifice de sortie (32A), la tête définissant un socle de réception du joint d'étanchéité (34) et comportant une ouverture (32C) dans sa partie supérieure par laquelle est introduit le joint d'étanchéité (34), ladite ouverture (32C) étant masquée par le levier d'actionnement (36) lorsque ce dernier est en position de fermeture du robinet (3).

8. Robinet selon l'une quelconque des revendications 1 à 7, **caractérisé en ce que** le corps du robinet (3) et le levier d'actionnement (36) sont réalisés en matériau plastique.

9. Robinet selon l'une quelconque des revendications 1 à 8, **caractérisé en ce que** le robinet (3) est monté de manière amovible sur le récipient (2).

10. Appareil électroménager de préparation culinaire comportant un récipient de travail (2) renfermant un outil rotatif pour le mixage des aliments, **caractérisé en ce que** ledit récipient (2) comporte un robinet (3) selon l'une quelconque des revendications 1 à 9.

## Claims

1. A drain tap (3) for the distribution of foodstuffs in a receptacle (2) of a domestic electrical cooking appliance, said drain tap (3) comprising a body including an inlet orifice (30B), an outlet orifice (32A) and containing valve facilities (34) with controlled openings located between the inlet orifice (30B) and the outlet orifice (32A), said valve facilities (34) being brought into a closed position by return means (39B) and drived to an opening position by an activating lever (36), **characterised in that** said activating lever (36) being mounted in a pivotal position on the body of the drain tap (3) by means of an articulated axle (37) held in an engaged position by a guidance hook (38) by spring action (39A), the activating lever (36) being capable of being dismantled from said body by pressing on the lever (36) for compressing the spring action (39A) and said articulated axle (37) being capable of disengagement by the guidance hook (38) and **in that** said activating lever (36) supports said valve facilities (34) in such a manner, that said valve facilities are extracted from the body of the drain tap at the same time as the activating lever (36) when being dismantled.

2. A drain tap according to Claim 1, **characterised in that** the articulated axle (37) is guided by two guidance hooks (38).

3. A drain tap according to any one of Claims 1 to 2, **characterised in that** the articulated axle (37) is carried by the activating lever (36) **in that** the one or the several guidance hooks (38) are borne by the body of the drain tap (3).

4. A drain tap according to any one of Claims 1 to 3, **characterised in that** return means (39B) of the valve facilities (34) and the spring action (39A) ensuring the engagement of the articulated axle (37) in the one or the several guidance hooks (38) are being made up of a same spring (39).

5. A drain tap according to any one of Claims 1 to 4, **characterised in that** the body of the drain tap has a feed conduit (31) for the foodstuffs ejected via a nozzle (33) where the valve is made up of a sealing joint (34) with its own face for interface application to a closing seating around said nozzle (33).

6. A drain tap according to Claim 5, **characterised in that** said sealing joint (34) is of silicone material.

7. A drain tap according to any one of Claims 5 or 6, **characterised in that** the body of the drain tap has a head (32) joined to the feed conduit (31) of the foodstuffs and equipped with said outlet orifice (32A), the head defining a receiving pedestal for the sealing joint (34) and including an opening (32C) on the upper part through which the sealing joint (34) is introduced, said opening (32C) is masked by the activating lever (36) when this is in the closed position of the drain tap (3).

8. A drain tap according to any one of Claims 1 to 7, **characterised in that** the body of the drain tap (3) and the activating lever (36) are manufactured of plastic material.

9. A drain tap according to any one of Claims 1 to 8, **characterised in that** the drain tap (3) is mounted interchangeably on the receptacle (2).

10. A domestic electrical cooking appliance comprising a working receptacle (2) including a rotating agitator for mixing foodstuffs, **characterised in that** said receptacle (2) includes a drain tap (3) according to any one of claims 1 to 9.

## Patentansprüche

1. Ablasshahn (3) zum Ablassen von in einem Behälter (2) eines elektrischen Küchengerätes zur Nahrungsmittelzubereitung befindlichen Nahrungsmitteln, wobei besagter Ablasshahn (3) aus einem Körper mit Einlassöffnung (30B) und Auslassöffnung (32A) besteht und zwischen Einlassöffnung (30B) und Auslassöffnung (32A) über Ventilmittel (34) mit Öffnungssteuerung verfügt, wobei besagte Ventilmittel (34) über Rückholmittel (39B) in Schließstellung gebracht und über einen Bedienhebel (36) zur Öffnung bewegt werden, **dadurch gekennzeichnet, dass** besagter Bedienhebel (36) mittels eines über Federmittel (39A) in mindestens einem Führungshaken (38) gehalten Gelenkstiftes (37) kippbar auf dem Ablasshahnkörper (3) montiert ist, wobei besagter Bedienhebel (36) von besagtem Körper durch Betätigung des Hebels (36) zum Komprimieren besagter Federmittel (39A) und Freisetzen des besagten Gelenkstiftes (37) aus dem Führungshaken (38) gelöst werden kann und dass besagter Bedienhebel (36) besagte Ventilmittel (34) so aufnimmt, dass letztere zusammen mit dem Bedienhebel (36) bei dessen Ausbau aus dem Ablasshahnkörper entfernt werden.

2. Ablasshahn nach Anspruch 1, **dadurch gekennzeichnet, dass** der Gelenkstift (37) über zwei Führungshaken (38) geführt wird.

3. Ablasshahn nach Anspruch 1 oder 2, **dadurch gekennzeichnet, dass** der Gelenkstift (37) am Bedienhebel (36) befestigt ist und dass der bzw. die Führungshaken (38) am Ablasshahnköper (3) befestigt sind.

4. Ablasshahn nach einem der Ansprüche 1 bis 3, **dadurch gekennzeichnet, dass** die Rückholmittel (39B) der Ventilmittel (34) und die Federmittel (39A), die sicherstellen, dass der Gelenkstift (37) sicher in dem bzw. den Führungshaken (38) liegt, durch ein- und dieselbe Feder (39) gebildet werden.

5. Ablasshahn nach einem der Ansprüche 1 bis 4, **dadurch gekennzeichnet, dass** der Ablasshahnkörper ein Rohrstück (31) zur Nahrungsmittelzufuhr aufweist, das in ein Ansatzstück (33) mündet und dass die Ventilmittel in Form eines Dichtungsrings (34) in Erscheinung treten, wobei dieser auf der einen Seite so ausgelegt ist, dass er schlüssig auf dem Schließsitz aufliegt, der besagtes Ansatzstück (33) umschließt.

6. Ablasshahn nach Anspruch 5, **dadurch gekennzeichnet, dass** besagter Dichtungsring (34) aus Silikonmaterial besteht.

7. Ablasshahn nach Anspruch 5 oder 6, **dadurch gekennzeichnet, dass** der Körper des Ablasshahns über ein Kopfstück (32) verfügt, das mit dem Rohrstück (31) zur Nahrungsmittelzufuhr verbunden ist und mit besagter Auslassöffnung (32A) versehen ist, wobei das Kopfstück einen Sockel zur Aufnahme des Dichtungsrings (34) bildet und in seinem oberen Bereich eine Öffnung (32C) aufweist, durch die der Dichtungsring (34) eingeführt wird, wobei besagte Öffnung (32C) durch den Bedienhebel (36) verdeckt wird, sobald sich letzterer in Schließstellung des Ablasshahns (3) befindet.

8. Ablasshahn nach einem der Ansprüche 1 bis 7, **dadurch gekennzeichnet, dass** der Ablasshahnkörper (3) und der Bedienhebel (36) aus Kunststoff bestehen.

9. Ablasshahn nach einem der Ansprüche 1 bis 8, **dadurch gekennzeichnet, dass** der Ablasshahn (3) abnehmbar auf dem Behälter (2) montiert ist.

10. Elektrisches Küchengerät zur Nahrungsmittelzubereitung, bestehend aus einem Arbeitsbehälter (2), welches ein Drehwerkzeug zum Mixen von Nahrungsmitteln enthält, **dadurch gekennzeichnet, dass** besagter Behälter (2) einen Ablasshahn (3) nach einem der Ansprüche 1 bis 9 besitzt.
